Europäisches Patentamt

European Patent Office

Office européen des brevets

(19)

(11) Numéro de publication: **0 365 377**
**A1**

(12) **DEMANDE DE BREVET EUROPEEN**

(21) Numéro de dépôt: **89402595.6**

(22) Date de dépôt: **21.09.89**

(51) Int. Cl.⁵: **F16H 25/18**

---

The title of the invention has been amended (Guidelines for Examination in the EPO, A-III, 7.3).

(30) Priorité: **23.09.88 FR 8812452**

(43) Date de publication de la demande: **25.04.90 Bulletin 90/17**

(84) Etats contractants désignés:
**DE ES FR GB IT SE**

(71) Demandeur: **Chorin, Christian**
**40 rue de Romaré**
**F-78120 Orcemont(FR)**

Demandeur: **Lanfranchi, Jean-Marie**
**107 avenue René Cassin**
**F-77190 Dammarie les Lys(FR)**

(72) Inventeur: **Chorin, Christian**
**40 rue de Romaré**
**F-78120 Orcemont(FR)**
Inventeur: **Lanfranchi, Jean-Marie**
**107 avenue René Cassin**
**F-77190 Dammarie les Lys(FR)**

(74) Mandataire: **Martin, Jean-Jacques et al**
**Cabinet REGIMBEAU 26, Avenue Kléber**
**F-75116 Paris(FR)**

---

(54) **Dispositif pour transformer un mouvement linéaire en mouvement oscillant, et inversement.**

(57) La présente invention concerne un dispositif pour transformer un mouvement linéaire en mouvement rotatif, ou réciproquement, du type comprenant deux tubes coaxiaux (4, 6) dont l'un (4) est fixe et dont l'autre (6) peut tourner sans coulisser par rapport au premier, et dans chacun desquels est ménagée au moins une lumière oblongue (9, 12), les lumières des deux tubes présentant l'un par rapport à l'autre, à un même niveau dans la direction axiale des tubes, une différence de pente, et au moins un élément rigide transversal (5, 11) traversant des lumières respectives de chacun des deux tubes, libre en pivotement et apte à être déplacé linéairement dans la direction de l'axe (A) des tubes pour induire la rotation dudit autre tube.

Selon l'invention, les lumières des deux tubes présentent une différence de pente variable selon le niveau.

FIG.1

# DISPOSITIF POUR TRANSFORMER UN MOUVEMENT LINEAIRE EN MOUVEMENT ROTATIF, ET INVERSEMENT.

La présente invention concerne un dispositif pour transformer un mouvement linéaire en mouvement rotatif, de façon éventuellement réversible.

La transformation d'un mouvement linéaire en mouvement rotatif est traditionnellement effectuée à l'aide d'un vérin qui porte une crémaillère, qui elle-même engrène avec un pignon. Un inconvénient de ce dispositif connu réside en ce qu'il présente nécessairement un rapport de transmission constant, d'où la nécessité de moduler la commande du vérin si l'on souhaite faire varier le couple ou la vitesse de rotation, cette modulation de la commande étant bien entendu indésirable du point de vue du coût du dispositif.

Par ailleurs, on connaît par le brevet FR-A 2 424 429 un dispositif du type exposé dans le préambule de la revendication 1, appliqué en particulier à la commande d'ouverture et de fermeture de soupapes sphériques.

Cependant un tel dispositif souffre des mêmes inconvénients que le dispositif à crémaillère et pignon précité. En effet, la pente de la ou des lumières étant constante, le rapport de transmission est également constant.

La présente invention vise à pallier les inconvénients de la technique antérieure et à proposer un dispositif transformateur de mouvement dans lequel on puisse, d'une façon extrêmement simple et pratique, faire varier le rapport de transmission, et en corollaire le couple de sortie.

A cet effet, il est proposé un dispositif ayant les caractéristiques de la revendication 1.

Des aménagements préférés du dispositif sont exposés dans les sous-revendications.

D'autres aspects, buts et avantages de la présente invention apparaîtront mieux à la lecture de la description détaillée suivante de diverses formes de réalisation préférées de celle-ci, donnée à titre d'exemple et faite en référence aux dessins annexés, sur lesquels :

la figure 1 est une vue en coupe axiale d'un dispositif selon une première forme de réalisation de l'invention,

la figure 2 est une vue en coupe transversale selon la ligne II-II de la figure 1,

la figure 3 est une vue en coupe axiale partielle d'un dispositif selon une deuxième forme de réalisation de l'invention, et

la figure 4 est une - vue en coupe axiale partielle d'un dispositif selon une troisième forme de réalisation de l'invention.

On notera que, d'une figure à l'autre, des parties ou éléments identiques ou similaires sont désignés par les mêmes numéros de référence.

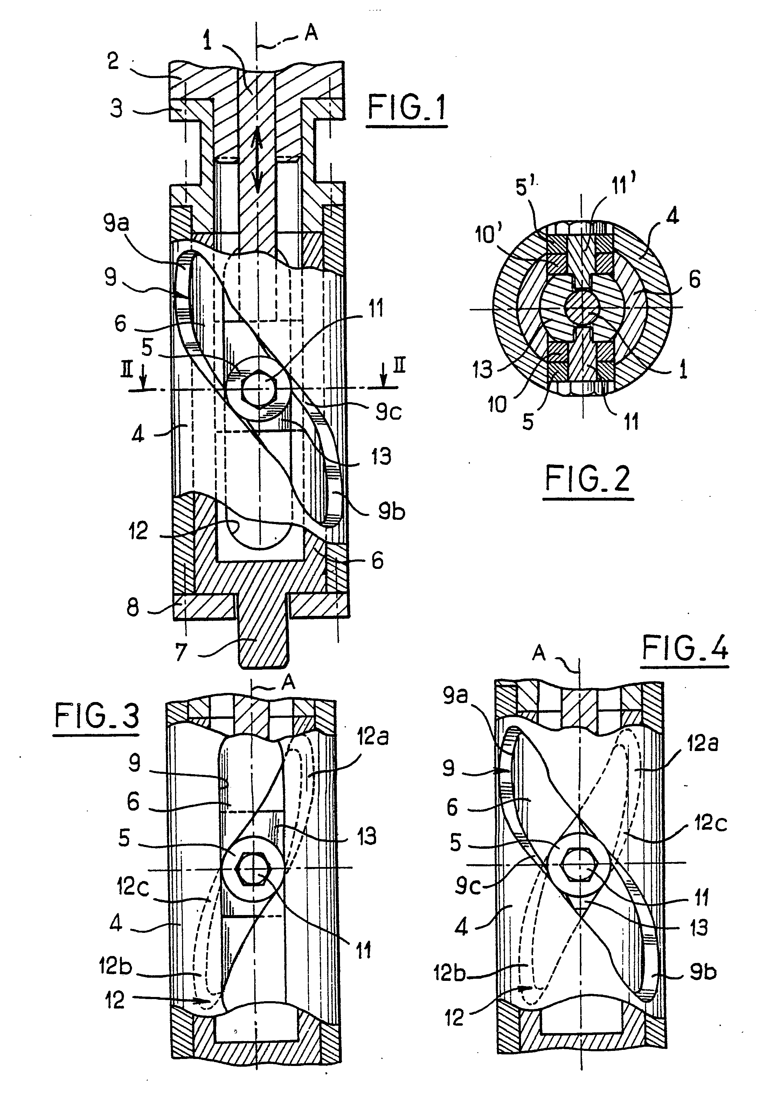

En référence tout d'abord aux figures 1 et 2, un dispositif selon l'invention comprend un premier tube 4 dans la paroi duquel sont ménagées deux lumières oblongues 9 diamétralement opposées, et dont la configuration géométrique sera décrite plus loin. Le tube 4 est fixé sur le corps 2 d'un vérin hydraulique ou pneumatique (représenté seulement partiellement) par l'intermédiaire d'une entretoise 3. Un second tube 6 comporte dans sa paroi deux lumières oblongues 12 diamétralement opposées. Le tube 6 est logé à l'intérieur du tube 4 de manière à pouvoir tourner par rapport à lui autour de leur axe commun A. Le tube 6 comporte à son extrémité inférieure une partie 7 de diamètre réduit, formant arbre de sortie. Afin d'éviter le déplacement longitudinal du second tube 6 par rapport au premier, une rondelle 8 est fixée, par exemple par soudage ou vissage, à la base du tube 4, en étant traversée par l'arbre de sortie 7. A l'extrémité opposée, c'est l'entretoise 3 qui empêche le tube 6 de se déplacer vers le haut.

Selon la figure 2, un axe cylindrique 13 est fixé à l'extrémité libre de la tige 1 du vérin précité, et peut coulisser verticalement et pratiquement sans jeu à l'intérieur du second tube 6. Sur l'axe 13 sont fixés, par exemple par vissage, deux tétons radiaux diamétralement opposés, respectivement 11 et 11', qui reçoivent chacun deux roulements à billes, respectivement 5, 10 et 5', 10', tous de même diamètre. Les roulements extérieurs 5, 5' sont engagés dans les lumières 9, en pouvant se déplacer sans celles-ci, tandis que les roulements intérieurs 10, 10' sont engagés dans les lumières 12, en pouvant se déplacer dans celles-ci. A cet égard, le diamètre des lumières 9, 12 est choisi très légèrement supérieur au diamètre extérieur des roulements.

Dans cette première forme de réalisation, les lumières intérieures 12 sont verticales, tandis que les lumières extérieures 9 présentent un profil du type hélicoïdal à pas variable, comme illustré, en ayant sensiblement la même étendue verticale que les lumières 9. Plus précisément, et conformément à un aspect essentiel de l'invention, les lumières 9 sont inclinées par rapport à la verticale à un degré variable suivant la cote verticale à laquelle on se place. Ainsi, dans l'exemple illustré, chaque lumière 9, dans des zones d'extrémité 9a et 9b, présente une inclinaison ou pente faible par rapport à la verticale, tandis que dans une zone centrale 9, son inclinaison ou pente par rapport à cette même verticale est plus prononcée. De façon préférée, les variations d'inclinaison rencontrées en parcourant les lumières 9 sont douces et progressives, pour ainsi éviter des à-coups dans la transmission.

Lors de la commande du vérin 2, c'est-à-dire un déplacement vertical de sa tige 1 et de l'axe 13, la circulation des roulements 5, 5′, 10, 10′ dans leurs lumières oblongues respectives 9, 12 induit une rotation du tube intérieur 6 et de l'arbre de sortie 7, avec une évolution angulaire qui suit celle des lumières extérieures 9.

Ainsi dans cet exemple, le rapport de transmission est plus faible au début et à la fin de la course du vérin, correspondant au parcours des zones 9a, 9b des lumières par les roulements 5, 5′, avec en corollaire un couple de sortie disponible plus élevé. Au contraire, dans la partie intermédiaire de la course (zone 9c des lumières 9), le rapport de transmission est accru, avec une diminution du couple.

On a représenté sur la figure 3 une seconde forme de réalisation de l'invention. Dans ce cas, les lumières 9 du tube extérieur 4 sont verticales, tandis que les lumières 12 du tube intérieur sont inclinées, avec comme illustré une pente ou inclinaison par rapport à la verticale qui varie sur son étendue. Dans ce cas encore, l'inclinaison par rapport à la verticale est plus prononcée dans la zone médiane 12c des lumières 12 que dans leurs zones extrêmes 12a, 12b. On obtient le même effet qu'avec le dispositif des figures 1 et 2. Dans cette variante, l'axe 13 et les roulements associés ne subissent pas de rotation autour de l'axe A. Elle est donc avantageusement utilisée lorsque, pour une raison ou une autre, la tige 2 du vérin ne peut ou ne doit pas tourner.

Dans la troisième forme de réalisation représentée sur la figure 4, les lumières 9 aussi bien que les lumières 12 sont inclinées par rapport à la verticale. Dans ce cas, la rotation du tube intérieur 6 et de l'arbre de sortie 7 est déterminée par l'écart angulaire apparaissant entre les positions mutuelles des lumières intérieures et extérieures lorsque les roulements 5, 5′, 10, 10′ parcourent ces rainures. Dans ce cas encore, le rapport de transmission est plus faible aux extrémités qu'au centre de la course du vérin.

A titre d'exemple non limitatif, le dispositif selon l'invention peut être utilisé pour l'ouverture et la fermeture de vantaux ou battants de portails ou analogues. Le mécanisme est par exemple monté sur un mur ou un poteau longeant le vantail, l'arbre de sortie 7 étant relié par une bielle et un bras de bielle au vantail.

Avec la configuration des lumières telle que décrite plus haut, on obtient, pour une vitesse linéaire constante et une force constante de la tige du vérin, une vitesse et couple différents au début des phases d'ouverture et de fermeture du vantail (vitesse réduite mais couple plus élevé), ce qui est extrêmement souhaitable. Par exemple, les pentes des lumières par rapport à la verticale peuvent être de l'ordre de 30° sur les 20 mm de début et fin de course du vérin (zones 9a et 9b sur la figure 1) et de l'ordre de 50° sur les 60 mm de la zone centrale 9c.

Dans cette application précise, la réversibilité peut être effectuée quant il n'y a pas d'air dans le vérin en exerçant une poussée manuelle sur le battant du portail.

Il est à noter que les termes "horizontal", "vertical" et analogues utilisés dans la description ci-dessus sont à considérer dans un sens relatif, le dispositif pouvant prendre une orientation toute autre que l'orientation verticale illustrée sur les figures.

Bien entendu, la présente invention n'est pas limitée aux formes de réalisation décrites et représentées, mais l'homme de l'art saura y apporter toute variante ou modification conforme à son esprit.

Par exemple, bien que l'on ait décrit ci-dessus un dispositif dans lequel chaque tube possède deux lumières diamétralement opposées, on peut ne prévoir qu'une seule lumière par tube. En outre, les roulements à billes peuvent être remplacés par des galets ou autres, voire des simples doigts rigide transversals graissés.

Par ailleurs, la forme, l'étendue et la dimension des lumières peut être tout à fait quelconque, pour autant qu'au moins localement elles présentent un changement de pente.

Enfin l'invention s'applique à tout domaine dans lequel un mouvement linéaire doit être transformé en mouvement rotatif, ou réciproquement, avec variation du rapport de transmission.

## Revendications

1. Dispositif pour transformer un mouvement linéaire en mouvement rotatif, ou réciproquement, du type comprenant deux tubes coaxiaux (4, 6) dont l'un (4) est fixe et dont l'autre (6) peut tourner sans coulisser par rapport au premier, et dans chacun desquels est ménagée au moins une lumière oblongue (9, 12), les lumières des deux tubes présentant l'un par rapport à l'autre, à un même niveau dans la direction axiale des tubes, une différence de pente, et au moins un élément rigide transversal (11, 5, 10; 11′, 5′, 10′) traversant des lumières respectives de chacun des deux tubes, libre en pivotement et apte à être déplacé linéairement dans la direction de l'axe (A) des tubes pour induire la rotation dudit autre tube, caractérisé en ce que les lumières (9, 12) des deux tubes présentent une différence de pente variable selon le niveau.

2. Dispositif selon la revendication 1, caractérisé en ce que chaque tube (4, 6) comporte deux lumières diamétralement opposées (9, 12) et en ce qu'il est prévu deux éléments rigides (11, 5, 10; 11′, 5′, 10′) solidaires l'un de l'autre.

3. Dispositif selon la revendication 2, caractérisé en ce que les lumières (12) du tube intérieur (6) sont parallèles à l'axe des tubes et en ce que les lumières (9) du tube extérieur (4) présentent une pente variable par rapport à la direction axiale des tubes.

4. Dispositif selon la revendication 2, caractérisé en ce que les lumières (9) du tube extérieur (4) sont parallèles à l'axe des tubes et en ce que les lumières (12) du tube intérieur (6) présentent une pente variable par rapport à la direction axiale des tubes.

5. Dispositif selon la revendication 2, caractérisé en ce que les lumières (9) du tube extérieur (4) et les lumières (12) du tube intérieur (6) présentent chacune une pente variable par rapport à la direction axiale des tubes.

6. Dispositif selon l'une des revendications 2 à 5, caractérisé en ce que chaque élément rigide transversal est défini par un téton radial (11, 11′) fixé sur un axe (13) situé dans le tube intérieur et capable de tourner et de coulisser par rapport à celui-ci et par deux éléments tournants (5, 10; 5′, 10′) montés sur ledit téton et engagés dans les lumières du tube intérieur et du tube extérieur, respectivement.

7. Dispositif selon la revendication 6, caractérisé en ce que les éléments tournants (5, 10; 5′, 10′) sont des roulements à billes ou des galets.

8. Dispositif selon l'une des revendications précédentes, caractérisé en ce que le ou chaque élément rigide transversal (11, 5, 10; 11′, 5′, 10′) est relié à la tige (2) d'un vérin, en ce que le tube extérieur (4) est fixé au corps (1) du vérin et en ce qu'un arbre de sortie (7) est fixé au tube intérieur (6).

9. Dispositif selon l'une des revendications précédentes, caractérisé en ce que la différence de pente entre les lumières (9, 12) des deux tubes est plus grande dans une région médiane (9c, 12c) desdites lumières que dans leurs régions d'extrémité (9a, 9b, 12a, 12b).

FIG.1

FIG.2

FIG.3

FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | BE-A- 494 028 (SOFITEC)<br>* En entier * | 1-3,6-9 | F 16 H  25/18 |
| Y | | 4,5 | |
| Y | GB-A-1 596 361 (EFFEPI)<br>* Page 1, ligne 96 - page 2, ligne 62; figure 2 * & FR-A-2 424 429 (Cat. D.) | 4 | |
| A | | 1,2,6-8 | |
| Y | DE-C- 304 771 (NAUJOKS)<br>* Page 1, ligne 35 - page 2, ligne 6; figure * | 5 | |
| A | | 1 | |

| | | | DOMAINES TECHNIQUES RECHERCHES (Int. Cl.5) |
|---|---|---|---|
| | | | F 16 H |

**Le présent rapport a été établi pour toutes les revendications**

| Lieu de la recherche | Date d'achèvement de la recherche | Examinateur |
|---|---|---|
| LA HAYE | 15-12-1989 | FLODSTROEM J.B. |